# EUROPÄISCHE PATENTSCHRIFT

(11) **EP 1 374 015 B1**
(45) Veröffentlichungstag und Bekanntmachung des Hinweises auf die Patenterteilung: **08.03.2006**
(21) Anmeldenummer: 02714125.8
(22) Anmeldetag: 28.01.2002
(51) Int. Cl.: G06F 1/00

(54) **TEILFUNKTIONSVORRICHTUNG FÜR EIN TRANSAKTIONSENDGERÄT**
SUB-FUNCTION DEVICE FOR A TRANSACTION
DISPOSITIF A FONCTION DE DIVISION DESTINE A UN TERMINAL DE TRANSACTION

(30) Priorität: 31.01.2001 DE 10104242
(43) Veröffentlichungstag der Anmeldung: 02.01.2004
(73) Patentinhaber: Giesecke & Devrient GmbH, 81677 München (DE)
(72) Erfinder: JOHNE, Andreas, 82194 Gröbenzell (DE)
(74) Vertreter: Klunker . Schmitt-Nilson . Hirsch
(86) Internationale Anmeldenummer: PCT/EP2002/000862
(87) Internationale Veröffentlichungsnummer: WO 2002/061551

(56) Entgegenhaltungen:
- EP-A- 0 440 545
- EP-A- 0 809 215
- WO-A-98/07255
- FR-A- 2 796 176
- US-A- 5 036 461

## Beschreibung

Die Erfindung betrifft die nachträgliche Erweiterung des Funktionsumfanges eines Transaktionsendgerätes durch Vergrößerung seiner Hardwarebasis.

Zur Vergrößerung des Funktionsumfanges von mikroprozessorbasierten Endgeräten ist es bekannt, diese mit zusätzlichen Hardware-Baugruppen auszurüsten, welche in vorbereitete Steckplätze eingesetzt werden. Dieses Konzept eignet sich jedoch nicht für Transaktionsendgeräte, die sensible Daten handhaben und deshalb manipulationssicher ausgeführt sein müssen.

Bekannt ist es weiterhin, einem Endgerät ein externes Hardware-Element zuzuordnen, welches durch das Endgerät mit Energie versorgt wird. US 5,386,369 beschreibt einen Hardware-Schlüssel, ein sogenanntes Dongle, mit dem die Benutzung von Software auf einem Computer erfaßbar ist Das Dongle wird in eine Signalverbindung zwischen dem Computer und einem Peripheriegerät eingesetzt. Als Teil der Signalverbindung verhält sich das Dongle für den Signalaustausch zwischen dem Computer und dem Peripheriegerät transparent. Es reagiert nur auf speziell für das Dongle bestimmte Signale, wobei diese entweder das Herunterzählen eines in dem Dongle realisierten Software-Zählspeichers bewirken oder dessen Aufladung einleiten. Indem die Zählspeicher softwaremäßig ausgeführt sind, ermöglicht das beschriebene Dongle die getrennte Nutzungserfassung für eine Vielzahl von auf dem Computer laufenden Programmen. Zweck des beschriebenen Dongles ist die Errichtung eines nicht umgehbaren Systems zur Erhebung von Gebühren für die Benutzung von Programmen. Das Dongle ist nicht Bestandteil einer auf dem Computer ausgeführten, durch ein Programm realisierten Funktionalität, sondern dient nur dazu, in Beobachterfunktion den Ablauf vorhandener Programme zu verfolgen.

Aus der EP 275 510 A2 ist weiterhin eine Chipkarte bekannt, auf die nachträglich Applikationen aufgebracht werden können. Mögliche Applikationen sind Sicherheits-, Identifikations- oder Transaktionsanwendungen, etwa Geldkartentransaktionsanwendungen. Neue Karten besitzen ein Urladerprogramm, das es ermöglicht, Applikationen zu laden. Ist wenigstens eine Applikation auf eine Chipkarte geladen, wird zum Zeichen hierfür ein Flag gesetzt. Die vorgeschlagenen Chipkarten sind hinsichtlich ihres Funktionsumfanges flexibel und lassen sich in verschiedenen üblichen Chipkartenapplikationen einsetzen. Darüber hinausgehende Einsatzmöghchkeiten sind nicht beschrieben.

Aus der WO 98/34192 sind desweiteren ein Verfahren sowie ein zugehöriges Gerät zum Aufbringen und Entnehmen von Informationen von einem Datenträger entnehmbar. Beschrieben werden dabei eine sinnvolle Struktur für auf einem Datenträger abgelegte Informationen sowie deren Nutzung durch das Gerät. Durch den Vorschlag werden Verarbeiten und Aufbringen von Informationen auf einen Datenträger vereinfacht Die Datenträger und die mit ihnen realisierten Anwendungen sind aber grundsätzlich von einem üblichen Typ.

Der Erfindung liegt die Aufgabe zugrunde, einen Weg aufzuzeigen, der es gestattet, die Hardwarebasis eines manipulationssicher ausgebildeten Transaktionsendgerätes zu erweitern, ohne die Manipulationssicherheit zu beeinträchtigen.

Diese Aufgabe wird gelöst durch eine Teilfunktionsvorrichtung mit den Merkmalen des Hauptanspruchs. Die Erfindung beruht auf der Überlegung, Transaktionsprogrammteile, deren Ausführungen die Hardware-Ausstattung eines Transaktionsendgerätes nicht zuläßt, in eine externe Teilfunktionsvorrichtung auszulagern, welche über eine speziell zur Ausführung dieser Programmteile geeignete Hardware verfügt. Das durch die Ausführung eines ausgelagerten Transaktionsprogrammteiles erhaltene Teilergebnis liefert die Teilfunktionsvorrichtung zurück an das Transaktionsendgerät. Die erfindungsgemäße Teilfunktionsvorrichtung erlaubt in vorteilhafter Weise die Vergrößerung der Hardwarebasis eines vorhandenen Transaktionsendgerätes, ohne daß dazu in die Hardware-Struktur des Transaktionsendgerätes selbst eingegriffen werden muß. Entsprechend erfolgt auch kein Eingriff in die Manpulationssicherheit des Endgeräts. Für die Transaktionsendgeräte bedeutet dies weiter, daß sie hardwaremäßig knapp dimensioniert werden können. Durch die Möglichkeit, sie bei Bedarf mittels der erfindungsgemäßen Teilfunktionsvorrichtungen hardwaremäßig nachzurüsten, wird erreicht, daß sie trotzdem für Funktionen eingesetzt werden können, für die sie hardwaremäßig gar nicht ausgelegt sind. Die mögliche knappere Dimensionierung neuer Transaktionsendgeräte vereinfacht die Fertigung und erlaubt niedrigere Endpreise.

In einer besonders vorteilhaften Ausgestaltung besitzt die erfindungsgemäße Teilfunktionsvorrichtung eine Schnittstelle zur Aufnahme eines tragbaren Datenträgers, welcher in die Ausführung der durch die Teilfunktionsvorrichtung ausgeführten Programmteile einbezogen wird. Durch die Maßnahme wird die Manipulationssicherheit der Teilfunktionsvorrichtung erhöht Zugleich wird ihre Handhabbarkeit verbessert, da mittels des tragbaren Datenträgers bequem eine Anpassung einer Teilfunktionsvorrichtung zur Ausführung eines Programmteiles erfolgen kann. Tragbare Datenträger in Gestalt von Chipkarten oder Minichipkarten sind dabei leicht verfügbar. In einer besonders vorteilhaften Ausgestaltung dient die erfindungsgemäße Teilfunktionsvorrichtung zur Erzeugung von Zertifikaten zum Nachweis der Identität eines Transaktionsendgerätes. In einer vorteilhaften Ausgestaltung des zur Kommunikation zwischen Trarisaktionsendgerät und Teilfunktionsvorrichtung eingesetzten Kommunikationsprotokolles werden die für die Teilfunktionsvorrichtung bestimmten Befehle durch eine besondere Kennung kenntlich gemacht. Vorteilhaft besitzt die Teiffunktionsvorrichtung weiter einen Zwischenspeicher, in den alle auf der Signalverbindung übertragenen Daten eingelesen und alle nicht für die Teilfunktionsvarrichtung bestimmten unverändert weitergeleitet werden.

Ein Ausführungsbeispiel der Erfindung wird nachfolgend unter Bezugnahme auf die Zeichnung näher erläutert.

Es zeigen:
- Fig. 1: eine in eine Signalverbindung zwischen einem Zahlungsverehrsterminal und einem Drucker eingesetzte Teilfunktionsvorrichtung,
- Fig. 2: eine zur Aufnahme eines tragbaren Datenträgers ausgebildete Teiffanktionsvorrichtung,
- Fig.3: ein Flußdiagramm zur Veranschaulichung einer Transaktionsprogrammausführung.

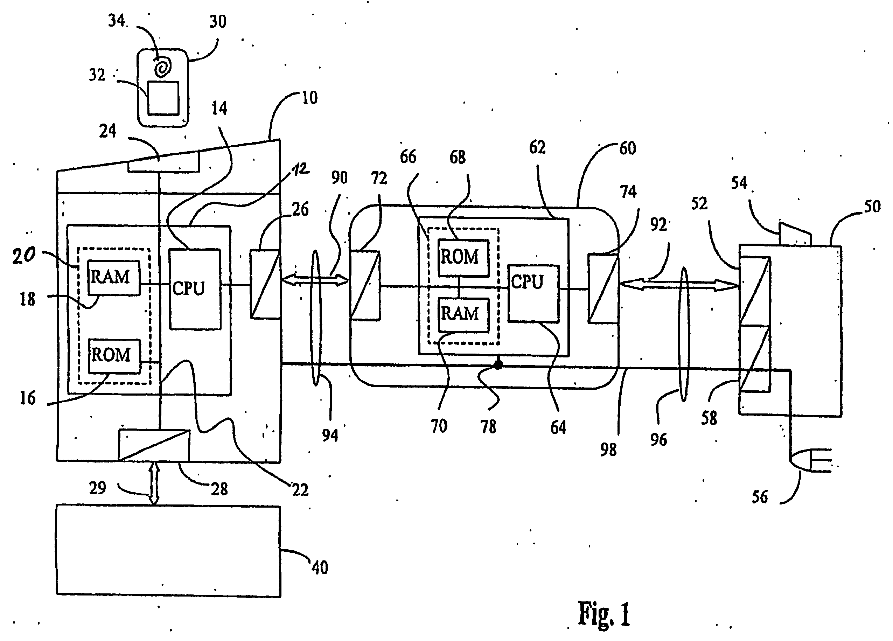

Fig. 1 zeigt als Beispiel für eine Verwendung der vorgeschlagenen Teilfunktionsvorrichtung eine Zahlungsverkehrskonfiguration mit einem Transaktionsendgerät 10, einem Hintergrundsystem 40, einem tragbaren Datenträger 30, einem Peripheriegerät 50 sowie einer Teilfunktionsvorrichtung 60, welche in eine Signalverbindung 90, 92 zwischen Zahlungsverkehrsterminal 10 und Peripheriegerät 50 geschaltet ist.

Bei dem Transaktionsendgerät 10 handelt es sich um eine mit einem Computer ausgestattete Vorrichtung zur Ausführung von Transaktionsprogrammen, die Geschäftstransaktionen nachbilden. Im folgenden wird für das Transaktionsendgerät 10 die Ausgestaltung eines üblichen Zahlungsverkehrsterminals zur Ausführung von Zahlungverkehrstransaktionen angenommen, wie es etwa zur Durchführung des Lastschrinverfahrens mittels Chipkarten eingesetzt wird. Die Gestaltung des Endgeräts 10 ist gleichwohl nicht auf diese Ausführungsfarm beschränkt.

Zentrales Element des, nachfolgend vereinfacht Terminal genannten Zahlungsverkehrsterminals 10 ist eine manipulationssicher ausgeführte Datenverarbeitungseinheit 12, die alle Komponenten eines üblichen Computers aufweist. Unter anderem umfaßt die Datenverarbeitungseinheit 12 eine zentrale Prozessoreinheit 14 zur Ausführung mindestens eines Transaktionsprogrammes sowie eine Speichereinrichtung 20 mit einem nichtflüchtigen Speicher 16 zur Aufnahme von Betriebs- und Transaktionsprogrammen sowie einem flüchtigen, als Arbeitsspeicher dienenden Speicher 18. Mit der Datenverarbeitungseinheit 12 sind über ein terminalintemes Datennetz 22 eine Datenträgerschnittstelle 24, eine Signalschnittstelle 26 zu einem Peripheriegerät 50 sowie eine Signalschnittstelle 28 zu einem Hintergrundsystem 40 verbunden. Die Datenträgerschnittstelle 24 ist im Ausführungsbeipiel ein übliches Chipkartenlesegerät zum kontaktlosen oder kontaktbehafteten Datenaustausch mit dem Chipprozessor einer Chipkarte 30. Die Peripheriegeräteschnittstelle 26 hat die Gestalt einer üblichen vielpoligen, seriellen oder parallelen Schnittstelle zum Anschluß eines Peripheriegerätes 50, etwa eines Displays oder eines Druckers. Die Schnittstelle 28 verbindet das Terminal 10 mit einem Hintergrundsystem 40. Die Verbindung 29 kann dabei über ein frei zugängliches Kommunikationsnetz, etwa das Internet, oder über eine besondere Datenleitung hergestellt sein.

Für den Datenträger 30 wird im folgenden die Gestalt einer Chipkarte angenommen, wobei aber ebenso auch beliebige andere Ausführungsformen, etwa Stift- oder Ringform möglich sind. In Chipkartenform ist der Datenträger 30 entsprechend mit einem Mikroprozessorschalikreis 32, dem Chip, ausgerüstet, in welchem sich zur Ausführung einer Transaktion benötigte Transaktionsdaten befinden. Teil der Chipkarte 30 ist weiterhin eine Schnittstelle 34, welche zu derterminalseitigen Schnittstelle 24 korrespondiert und einen Datenaustausch zwischen Chip 32 und Datenverarbeitungseinheit 12 im Terminal 10 ermöglicht.

Bei dem Hintergrundsystem 40 handelt es sich beispielsweise um eine Bank oder um eine Abrechnungszentrale. Es ordnet der zwischen Terminal 10 und Chipkarte 30 auf Datenebene ausgeführten logischen Transaktion eine physikalische oder materielle Wirkung zu. Im Rahmen des Lastschriftverfahrens bewirkt es z.B. die Abbuchung eines Zahlungsbetrages von einem der Chipkarte 30 zugeordneten Konto sowie dessen nachfolgende Gutschrift auf einem dem Terminal 10 zugeordneten Konto.

Für das Peripheriegerät 50 wird nachfolgend ein Datenausgabegerät in Gestalt eines Druckers angesetzt, welcher zur Ausgabe von Belegen über . Transaktionen zwischen Chipkarte 30 und Terminal 10 dient. Er ist zu diesem Zweck über eine Schnittstelle 52 an die Verbindungsleitung 92, 90 zum Terminal 10 angeschlossen und verfügt über eine Belegausgabevorrichtung 54 zur Ausgabe erzeugter Belege. Über den Drucker 50 erfolgt desweiteren die Energieversorgung des Terminals 10, der Teilfunktionsvorrichtung 60 und damit indirekt auch der Chipkarte 30. Der Drucker 50 besitzt hierfür auf der einen Seite einen üblichen Netranschluß, über den seine eigene Energieversorgung erfolgt. Auf der anderen Seite besitzt er einen Netzausgang 58, an dem eine Energiezuleitung für das Terminal 10 angeschlossen ist. Vorzugsweise bilden Schnittstelle 52 und Netzausgang 58 ein zusammenliegendes Anschlußfeld und sind die Signalverbindung 90, 92 und die Energiezuleitung 98 in einer einzigen Verbindungsleitung 94, 96 realisiert, so daß sich bequem durch einen einzigen Anschlußvorgang gleichzeitig die Signalverbindung 90, 92 wie die Energieversorgung 98 herstellen lassen. Die Erscheinungsform des Peripheriegerätes 50 ist im übrigen nicht auf eine Ausführung als Drucker beschränkt sondern kann vielmehr von jedem beliebigen Typ sein, der über eine Signalverbindung 90, 92 mit dem Terminal 10 verbunden ist.

Die Teilfunktionsvorrichtung 60 verfügt über eine Datenverarbeitungseinheit 62 in Gestalt eines Mikrocomputers mit einer zentralen Prozessoreinheit 64 sowie einer Speicheranordnung 66, welche einen nichtflüchtigen Speicher 68 sowie einen flüchtigen Speicherbereich 70 beinhaltet Im nichtflüchtigen Speicher 68 liegen zum einen das Betriebssystem für die zentrale Prozessoreinheit 64, zum anderen Applikationsprogramme, welche insbesondere Progranlmsequenzen umfassen, die Teilergebnisse für durch das Terminal ausgeführte Transaktionsprogramme liefern. Weiter besitzt die Teilfunktionsvorrichtung 60 zwei Schnittstellen 72, 74, welche die Datenverarbeitungseinheit 62 über die Signalverbindung 90 mit dem Terminal 10 bzw. über die Signalverbindung 92 mit dem Drucker 50 verbinden. Die Energieversorgung der Teilfunktionsvorrichtung 60 erfolgt durch einen Abgriff 78 an der Energiezuleitung 98 zum Terminal 10, welche hierzu durch die Teilfunktionsvorrichtung 60 hindurchgeschleift wird.

In der in Fig.1 angedeuteten Ausgestaltung besitzt die Teiliunktionsvorrichtung 60 keine Mittel zur Dateneingabe oder zur Datenausgabe. Sie ist baulich zweckmäßig klein im Verhältnis zum Terminal 10 ausgeführt und bildet vorzugsweise einen integralen oder quasiintegralen Bestandteil der Verbindungsleitung 94, 96. In ersterem Fall erscheint die Teilfunktionsvorrichtung 60 als Verdickungsbereich in einer dann nicht unterbrochenen, einheitlichen Verbindungsleitung 94, 96, welche auf der einen Seite direkt am Terniinal 10 und auf der anderen Seite direkt am Drucker 50 anschließbar ist Bei quasiintegraler Ausgestaltung ist zumindest eine der Schnittstellen 72, 74 zwischen Teilfunktionsvorrichtung 60 und Verbindungsleitungsteil 94, 96 auch physikalisch trennbar ausgebildet. Die Teilfunktionsvorrichtung 60 erscheint in diesem Fall als Teil der Verbindungsleitung 94, 96, als verdicktes Endstück oder gänzlich als in eine vorhandene Schnittstelle in einer Verbindungsleitung 94, 96 einzusetzendes Zwischenelement. Zweckmäßig ist die Teilfunktionsvorrichtung 60 von einem Gehäuse ummantelt, das eine hohe mechanische Stabilität aufweist und staub- und wasserdicht ist.

Die Teilfunktionsvorrichtung 60 stellt mit ihrer Datenverarbeitungseinheit 62 eine jederzeit verfügbare, zusätzliche Hardwareergänzung bereit, die das Terminal 10 bei Bedarf nutzen kann, um Teile eine Transaktionsprogrammes darauf auszulagern Fig. 3 veranschaulicht den grundsätzlichen Ablauf bei der Ausführung eines Transaktionsprogrammes unter Einschaltung einer Teilfunktionsvorrichtung 60. Das in den Ablaufschritten mit "T" bezeichnete Terminal 10 startet die Ausführung eines Transaktionsprogrammes zunächst ohne Mitwirkung der Teilfunktionsvorrichtung 60, Schritt 300, und setzt die Ausführung fort, bis diese die Ausführung eines Programmteiles erfordert, den das Terminal 10 als auszulagernden erkennt, Schritt 302. Zur Ausführung des auszulagernden Programmteües schaltet das Terminal 10 nun eine geeignete, mit "F" bezeichnete Teilfunktionsvorrichtung 60 zu, Schritt 304.

Die Zuschaltung erfolgt, indem das Terminal 10 besöndere, für die Teilfunktionsvorrichtung 60 bestimmte Befehle auf die Signalverbindung 90 ausgibt. Kenntlich gemacht werden die besonderen Befehle zweckmäßig durch eine vereinbarte Kennung im Header der Befehle. Die für eine Teilfunktionsvorrichtung 60 bestimmten Befehle filtert diese aus dem Datenstrom auf der Signalverbindung 90, 92 heraus und verarbeitet sie in einem in der Teilfunktionsvorrichtung 60 eingerichtetete.n Applikationsprogramm, Schritt 306 , welches ein von dem Terminal 10 für die weitere Ausführung der begonnenen Transaktion benötigtes Zwischenergebnis liefert Die von der Teilfunktionsvorrichtung 60 aus dem Datenstrom herausgefilterten Befehle gelangen nicht an den Drucker 50. Der Filtervorgang wird beispielsweise realisiert, indem die Teilfunktionsvorrichtung 60 sämtliche über die Signalverbindung 90, 92 eingehende Daten und Befehle zunächst zwischenspeichert, z. B. in einem hierfür bereitgehaltenen Bereich in dem nichtflüchtigen Speicher 66, und anschließend nur diejenigen Signale und Befehle auf dem druckerseitigen Signalverbindungsabschnitt 92 weiterleitet, welche nicht für die Teilfunktionsvorrichtung 60 bestimmt sind. Das durch Ausführung des Applikationsprogrammes gewonnene Teilergebnis liefert die Teilfunktionsvorrichtung 60 zurück an das Terminal 10, Schritt 308, das daraufhin mit der Ausführung des Transaktionsprogrammes fortfährt, Schritt 310.

Eine bevorzugte Nutzung der Teilfunktionsvorrichtung 60 besteht in der Bereitstellung einer Transaktionszusatzseinheit, die die Ausführung von Programmelementen erlaubt, welche mittels der Hardware eines Terminals 10 nicht ausführbar sind. Ein Beispiel hierfür bildet ein Zahlungsverkehrsterminal, das nicht über einen mathematischen Coprozessor verfügt und dessen Hardwareausstattung deshalb z.B. nicht ausreicht, bestimmte, aufwendige Sicherheitsalgorithmen auszuführen, wie sie zunehmend zur Sicherung von Zahlungsverkehrstransaktionen eingesetzt werden. Die fehlende Hardwareausstattung und damit die Funktionalität zur Ausführung solcher Algorithmen läßt sich nun durch eine Teilfunktionsvorrichtung 60 bereitstellen. Hierzu wird einfach eine entsprechend eingerichtete Teilfunktionsvorrichtung 60 in die Verbindungsleitung 94, 96 geschaltet. Nachfolgend kann dann eine Zahlungsverkehrstransaktion unter Nutzung der zugeschalteten Teilfunktionsvorrichtung 60 ausgeführt werden. Die Ausführung der Transaktion erfolgt zunächst in üblicher Weise durch die Datenverarbeitungseinheit 12 des Terminals 10. Kommt die Ausführung an die Durchführung eines erwähnten, mit der Hardware des Terminals 10 nicht ausführbaren Algorithmus, übergibt das Terminal 10 die zu verarbeitenden Eingangsdaten sowie einen Startbefehl an die Teilfunktionsvorrichtung 60. Diese führt mit den übergebenen Daten den Algorithmus durch und liefert das resultierende Teilergebnis zurück an das Terminal 10, welches daraufhin mit der Ausftihrung der Transaktion fortfährt.

Die Teilfunktionsvorrichtung 60 ist nicht nur zur Ausführung eines einzelnen Programmteiles einsetzbar. Sie kann vielmehr im Rahmen der Ausführung einer Transaktion ohne weiteres auch mehrere unterschiedliche Programmteile ausführen und jeweils Teilergebnisse an das Terminal zurückliefern, welche für die Ausführung einer Transaktion notwendig sind. Eine Nutzungsmöglichkeit der vorgeschlagenen Teilfunktionsvorrichtung 60 besteht weiter auch darin, mehrere Teilfunktionsvorrichtungen 60 zur Ausführung unterschiedlicher Programmelemente bereitzuhalten und jeweils die für eine spezielle Transaktion benötigte in die Verbindungsleitung 94, 96 zu bringen.

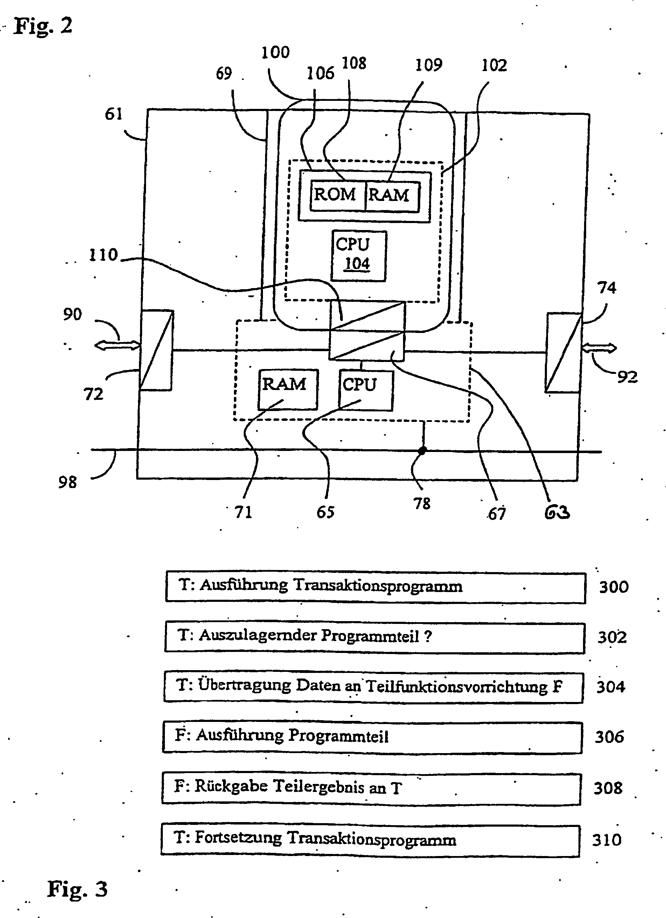

Eine Ausgestaltungsvariante der Teilfunktionsvorrichtung mit erhöhter funktioneller Variabilität ist in Fig. 2 gezeigt. Die darin dargestellte Teilfunktionsvorrichtung 61 stimmt mit der in Fig.1 gezeigten Teilfunktionsvorrichtung 60 dahingehend überein, daß sie ebenfalls zwei Schnittstellen 72 und 74 zur Einbringung in eine Signalverbindung 90, 92 aufweist und sie ihre Energieversorgung ebenfalls über einen Abgriff 78 an der Energiezuleitung 98 für das Terminal 10 erhält. Übereinstimmend mit dem Ausführungsbeispiel nach Fig.1 erfolgen weiter auch die grundsätzliche Einbringung in die Verbindungsleitung 94, 96 bzw. die integrierte Ausgestaltung der Teilfunktionsvorrichtung 61 als Teil der Verbindungsleitung 94, 96. Die in Fig.1 gezeigte Teilfunktionsvorrichtung 61 verfügt ferner auch über eine Datenverarbeitungseinheit 63 mit einer zentralen Prozessoreinheit 65.

Im Unterschied zu der in Fig.1 gezeigten Ausführungsvariante besitzt die Datenverarbeitungseinheit 63 zusätzlich eine weitere Schnittstelle 67, welche die Herstellung einer Datenverbindung zwischen der zentralen Prozessoreinheit 65 und einer auswechselbaren, externen Zusatzeinheit 100 ermöglicht.

Vorzugsweise handelt es sich bei der externen Zusatzeinheit 100 um einen tragbaren Datenträger in Gestalt einer Chipkarte, wobei sie auf die Gestalt einer Chipkarte aber nicht beschränkt ist, sondern grundsätzlich auch eine beliebige andere Erscheinungsform besitzen kann, etwa die eines Stiftes oder einer Kugel. Angepaßt an die nachfolgend angenommene Ausführung als Chipkarte ist die Schnittstelle 67 entsprechend als kontaktlos oder kontaktbehaft arbeitender Chipkartenleser ausgeführt. Die Chipkarte 100 verfügt ihrerseits über eine zur Schnittstelle 67 korrespondierende, kontaktlos oder kontaktbehaftet arbeitende Schnittstelle 110. Bevorzugt ist die Chipkarte 100 als Minichipkarte ausgeführt. Ihr funktionales Hauptelement bildet entsprechend eine Datenverarbeitungseinheit 102 in Gestalt eines Chips, in dem ein Mikrocomputer mit allen üblichen Komponenten realisiert ist. Insbesondere umfaßt die Datenverarbeitungseinheit 102 eine zentrale Prozessoreinheit 104 sowie eine Speicheranordnung 106 mit einem nichtflüchtigen Speicher 108 zur Ablage von Betriebsprogrammen und Applikationen sowie einem flüchtigen Speicher 109, welcher als Arbeitsspeicher dient.

Das für den Datenaustausch zwischen Datenverarbeitungseinheit 63 der Teilfunktionsvorrichtung 61 und Datenverarbeitungseinheit 102 der Chipkarte 100 über die Schnittstellen 67, 110 eingesetzte Kommunikationsprotokoll kann verschieden sein von dem auf der Signalverbindung 90, 92 eingesetzten Kommunikationsprotokoll. Die Umsetzung zwischen den Protokollen erfolgt in der Teilfunktionsvorrichtung 61 durch die zentrale Prozessoreinheit 65 der Datenverarbeitungseinheit 63.

Für das Zusammenbringen der Chipkarte 100 und der Schnittstelle 67 der Teilfunktionsvorrichtung 61 weist diese zweckmäßig einen Aufnahmeschacht 69 auf, in welchen die Chipkarte 100 eingesteckt und mechanisch fixiert wird. Der Aufnahmeschacht 69 nimmt vorzugsweise die gesamte Chipkarte 100 auf und ist verschließbar, so daß die Teilfunktionsvorrichtung 61 insgesamt als abgeschlossenes Element erscheint.

Bei der in Fig. 2 dargestellten Teilfunktionsvorrichtung 61 sind die Applikationsprogramme zur Herstellung der Funktionalität zur Ernnittlung von Teilergebnissen für ein zugehöriges Terminal 10 in der Datenverarbeitungseinheit 102 der Chipkarte 100 realisiert. Die Datenverarbeitungseinheit 63 der Teurunktionsvorrichtung 61 hat im wesentlichen die Funktion, in dem Datenverkehr auf der Signalverbindung 90, 92 die für die Teilfunktionsvorrichtung 63 bestimmten Befehle und Daten zu erkennen und über die Schnittstellen 67, 110 an die Datenverarbeitungseinheit 102 der Chipkarte 100 zu leiten. Dies kann geschehen, indem zunächst alle über die Signalverbindung 90, 92 übertragenen Daten und Befehle in einem Speicher 71 der Datenverarbeitungseinheit 63 zwischengespeichert werden, um sodann anhand einer jedem Datensatz beigefügten Kennung die an die Chipkarte 100 zu übergebenden zu ermitteln. Alle nicht für die Teilfunktionsvorrichtung 61 bestimmten Befehle und Daten werden unter Steuerung der zentralen Prozessoreinheit 65 an den Drucker 50 weitergeleitet.

Aus den ihr von der Datenverarbeitungseinheit 63 übergebenen Programmen und Daten ermittelt die Datenverarbeitungseinheit 102 der Chipkarte 100 Teilergebnisse, die sie an die Datenverarbeitungseinheit 63 zurückgibt Von dieser werden sie unter Steuerung der zentralen Prozessoreinheit 65 an das Terminal weitergeleitet

Die Chipkarte 100 mit der Datenverarbeitungseinheit 102 wird dabei, analog zur Datenverarbeitungseinheit 62, im Ausführungsbeispiel nach Fig.1 vorzugsweise eingesetzt, um Programmteile auszuführen, deren Ausführung die Hardware des Terminals 10 nicht erlaubt Eine Chipkarte 100 mit einer einzelnen Datenverarbeitungseinheit 102 kann dabei zur Ermittlung eines einzigen Teilergebnisses oder auch zur Ermittlung einer Reihe von Teilergebnissen in Antwort auf eine oder mehrere entsprechende Anforderungen von einem Terminal eingesetzt werden. Durch Wechseln der Chipkarten 100 kann die Teilfimktionsvorrichtung 61 an die Anforderungen verschiedener Terminals 10 oder unterschiedlicher Nutzungen eines einzelnen Terminals angepaßt werden.

In eine Verbindungsleitung 94,96 können ferner mehrere Teilfunktionsvorrichtungen 60, 61 in Reihe angeordnet sein, wobei die einzelnen Teilfunktionsvorrichtungen 60, 61 jeweils besondere Programmteile ausführen und entsprechende Teilergebnisse liefern. Bei Ausführung der Teilfunktionsvorrichtungen nach Fig. 2 mit einschiebbarer Chipkarte 100 kann weiter vorgesehen sein, daß zwischen Datenverarbeitungseinheit 63 der Teilrunktionsvorrichtung 61 und Datenverarbeitungseinheit 102 der Chipkarte 100 eine ein- oder wechselseitige Authentifizierung erfolgt.

Unter Beibehaltung des grundlegenden Konzeptes, bestimmte durch ein Terminal auszuführende Programmteile, insbesondere solche, deren Ausführung wegen fehlender Hardwareausstattung in einem Terminal nicht möglich ist, auf eine in einer Signalverbindung 90, 92 eingesetzte Teilfunktionsvorrichtung 60, 61 zu übertragen, erlaubt das vorgeschlagene Konzept eine Vielzahl von Ausgestaltungen.

## Patentansprüche

1. Teilfunktionsvorrichtung (60) zur Vergrösserung der Hardwarebasis eines Transaktionsendgerätes (10),
- welche in eine Signalverbindung zwischen einem Peripheriegerät (50) und einem Transaktionsendgerät (10) zur Ausführung von Transaktionsprogrammen eingebracht wird,
- mit einer Schnittstelle (72, 74) zum Anschluss an die Signalverbindung zu dem Peripheriegerät (50) sowie mit einer Schnittstelle an die Signalverbindung zu dem Transaktionsendgerät (10) hin,
- sowie mit einem Mikrocomputer (62), der seine Energieversorgung von einem der an die Signalverbindung angeschlossenen Geräte bezieht und dazu eingerichtet ist, für die Teilfunktionsvorrichtung bestimmte Signale auf der Signalverbindung zu erkennen,
- die eine Schnittstelle (67) zur Anbindung eines Datenträgers (100) aufweist, auf welchem sich ein Mikrocomputer (102) befindet, der Mittel zur Ausführung eines Teiles eines Transaktionsprogrammes aufweist, um nach zuschaltung durch das Transaktionsendgerätes (10) ein im Rahmen der ausführung einer Transaktion auf dem Transaktiorisendgerätes (10) benötigtes Teilergebnis zu erzeugen und an das Transaktionsendgerätes (10) zurückzuliefern,
**dadurch gekennzeichnet, dass** die Schnittstelle (67) zur Anbindung eines tragbaren Datenträgers (100) vorgesehen ist.

2. Teilfunktionsvorrichtung nach Anspruch 1, **dadurch gekennzeichnet, daß** die weitere Schnittstelle ein kontaktlos oder kontaktbehaftet arbeitender Kartenleser zur Ausbildung einer Datenkommunikation mit einer Chipkarte ist.

3. Teilfunktionsvorrichtung nach Anspruch 1, **dadurch gekennzeichnet, daß** der Mikrocomputer (62, 102) einen Speicher (70, 110) aufweist, in den er alle über die Signalverbindung (90, 92) übertragenen Befehle und Daten zwischenspeichert..

4. Transaktionsendgerät zur Verwendung in Verbindung mit einer Teilfunktionsvorrichtung nach Anspruch 1, **dadurch gekennzeichnet daß** es die Ermittlung eines bei der Ausführung eines Transaktionsprogrammes benötigten Teilergebnisses über die Signalverbindung (90) der Teilfunktionsvorrichtung überträgt.

5. Verfahren zur Ausführung einer Transaktion unter Verwendung eines Transaktionsendgerätes, **dadurch gekennzeichnet, daß** die Ermittlung zumindest eines bei der Ausführung eines Transaktionsprogrammes benötigten Teilergebnisses von einer Teilfunktionsvorrichtung gemäß Anspruch 1 durchgeführt wird.

## Claims

1. Subfunction apparatus (60) for expanding the hardware basis of a transaction terminal (10),
- which is incorporated into a signal connection between a peripheral device (50) und a transaction terminal (10) for executing transaction programs,
- with an interface (72, 74) for connection to the signal connection to the peripheral device (50) and with an interface to the signal connection to the transaction terminal (10),
- and with a microcomputer (62), which is supplied with energy by one of the devices connected to the signal connection and adapted to recognize signals on the signal connection meant for the subfunction apparatus,
- which has an interface (67) for connecting a data carrier (100), on which is located a microcomputer (102) that has means for executing a part of a transaction program, so as to produce, after connection by the transaction terminal (10), a partial result needed for the execution of a transaction on the transaction terminal (10) and to supply such result back to the transaction terminal (10),
**characterized in that** the interface (67) for connecting a portable data carrier (100) is provided.

2. Subfunction apparatus according to claim 1, **characterized in that** the further interface is a contactlessly or contact-type working card reader for forming a data communication with a chip card.

3. Subfunction apparatus according to claim 1, **characterized in that** the microcomputer (62, 102) has a memory (70, 110), in which it temporarily stores all instructions and data transmitted via the signal connection (90, 92).

4. Transaction terminal for use in conjunction with a subfunction apparatus according to claim 1, **characterized in that** it transmits the determination of a partial result needed for the execution of a transaction program via the signal connection (90) of the subfunction apparatus.

5. Method for executing a transaction using a transaction terminal, **characterized in that** the determination of at least one partial result needed for the execution of a transaction program is executed by a subfunction apparatus according to claim 1.

## Revendications

1. Dispositif (60) assurant une partie des fonctions, pour l'extension de la base matérielle d'un équipement terminal de transaction (10),
- qui est inséré dans une liaison de signal entre un équipement périphérique (50) et un équipement terminal de transaction (10) pour l'exécution de programmes de transaction,
- avec une interface (72, 74) pour le raccordement sur la liaison de signal à l'équipement périphérique (50) ainsi qu'avec une interface pour raccordement sur la liaison de signal à l'équipement terminal de transaction (10),
- ainsi qu'avec un micro-ordinateur (62) qui reçoit son alimentation en énergie à partir de l'un des équipements raccordés sur la liaison de signal et qui est adapté à reconnaître des signaux sur la liaison de signal qui sont spécifiques au dispositif assurant une partie des fonctions,
- qui présente une interface (67) pour le raccordement d'un support de données (100) sur lequel est situé un micro-ordinateur (102) présentant des moyens pour l'exécution d'une partie d'un programme de transaction, afin, après mise en circuit à travers l'équipement terminal de transaction (10) de fournir dans le cadre de l'exécution d'une transaction sur l'équipement terminal de transaction (10) un résultat partiel nécessaire, et de le renvoyer à l'équipement terminal de transaction (10),
**caractérisé en ce que** l'interface (67) est prévue pour le raccordement d'un support de données portatif (100).

2. Dispositif assurant une partie des fonctions selon la revendication 1, **caractérisé en ce que** l'interface supplémentaire est un lecteur de carte fonctionnant avec ou sans contacts, pour la réalisation d'une communication de données avec une carte à puce.

3. Dispositif assurant une partie des fonctions selon la revendication 1, **caractérisé en ce que** le micro-ordinateur (62, 102) présente une mémoire (70, 110) dans laquelle il stocke de façon intermédiaire toutes les commandes et les données transmises par la liaison de signal (90, 92).

4. Equipement terminal de transaction pour utilisation dans une liaison avec un dispositif assurant une partie des fonctions selon la revendication 1, **caractérisé en ce qu'**il assure la transmission d'un résultat partiel nécessaire pour l'exécution d'un programme de transaction via la liaison de signal (90) du dispositif assurant une partie des fonctions.

5. Procédé pour la réalisation d'une transaction avec utilisation d'un équipement terminal de transaction, **caractérisé en ce que** la fourniture d'au moins un résultat partiel nécessaire pour l'exécution d'un programme de transaction est réalisé grâce à un dispositif assurant une partie des fonctions selon la revendication 1.
